(19) Europäisches Patentamt
European Patent Office
Office européen des brevets

(11) Veröffentlichungsnummer: **0 085 321**
**B1**

(12) # EUROPÄISCHE PATENTSCHRIFT

(45) Veröffentlichungstag der Patentschrift: **27.08.86**

(51) Int. Cl.⁴: **C 07 F 9/38**, C 07 F 9/40, A 61 K 31/66

(21) Anmeldenummer: **83100283.7**

(22) Anmeldetag: **14.01.83**

(54) **Diphosphonsäure-Derivate und diese enthaltende pharmazeutische Präparate.**

(30) Priorität: **27.01.82 DE 3203309**
**05.07.82 DE 3225468**

(43) Veröffentlichungstag der Anmeldung:
**10.08.83 Patentblatt 83/32**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**EP - A - 0 015 370**
**EP - A - 0 084 822**

**M. WINDHOLZ et al.: "THE MERCK INDEX", 9. Auflage, 1976, Seiten 31,296,279,308,407,519,520,649,656,695,696,801,1164,12-24, APPENDIX-2, Merck & Co., Inc., Rahway, N.J., USA**
**CHEMICAL ABSTRACTS, Band 77, Nr. 13, 25. September 1972, Seite 23, no. 83538v, Columbus, Ohio, USA, W.R. MICHAEL et al.: "Effectiveness of diphosphonates in preventing osteoporosis of disuse in the rat"**

(73) Patentinhaber: **SCHERING AKTIENGESELLSCHAFT Berlin und Bergkamen, Müllerstrasse 170/178 Postfach 65 03 11, D-1000 Berlin 65 (DE)**

(72) Erfinder: **Biere, Helmut, Dr., Zeltinger Strasse 15, D-1000 Berlin 28 (DE)**
Erfinder: **Rufer, Clemens, Dr., Westhofener Weg 14, D-1000 Berlin 38 (DE)**
Erfinder: **Böttcher, Irmgard, Dr., Frobenstrasse 46, CH-4000 Basel (CH)**

**EP 0 085 321 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Diphosphonsäure-Derivate der allgemeinen Formel I

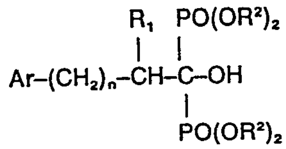

(I),

worin

n die Ziffern 0, 1 oder 2 bedeuten und worin

$R_1$ ein Wasserstoffatom oder eine 1 bis 4 Kohlenstoffatome enthaltende Alkylgruppe

$R_2$ ein Wasserstoffatom, ein Alkalimetallatom, ein Erdalkalimetallatom oder eine 1 bis 4 Kohlenstoffatome enthaltende Alkylgruppe und Ar einen durch Fluoratome oder Chloratome substituierten Phenylrest, einen Naphthylrest, einen Biphenylrest oder einen Thienylrest darstellen, und pharmazeutische Präparate, die diese Verbindungen enthalten.

Diphosphonsäure-Derivate mit antiatherogener Aktivität sind aus der Europäischen Patentanmeldung 0 015 370 vorbekannt.

Die erfindungsgemässen Verbindungen haben im Gegensatz zu den Carbonsäuren der Formel IV

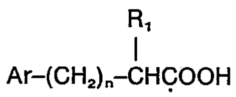

(IV),

(in dieser Formel werden die Substituenten so definiert wie oben) eine ausgeprägte antiinflammatorische und antiarthritische Wirksamkeit. Darüberhinaus zeichnen sie sich dadurch aus, dass sie unter anderem imstande sind, die Aufbau- und Abbau-Leistung der Knochenzellen (Osteoblasten/Osteoklasten) so zu beeinflussen, dass kurative Effekte bei Ratten mit induzierter Arthritis eindeutig nachweisbar sind.

Mit dieser antiarthritischen Wirksamkeit der erfindungsgemässen Verbindungen ist die Grundlage für eine Therapie der Rheumatoiden Arthritis, der Osteoarthritis, Spondylitis ankylosans und anderer verwandter Erkrankungen, besonders des Kollagens und des Skelettsystems (Osteoporose, Pagetskrankheit) geschaffen. Darüber hinaus können die Phosphonate als gute Komplexbildner für Calcium überall dort therapeutisch sinnvoll eingesetzt werden, wo ein gestörter Ca-Stoffwechsel als Ursache für eine Erkrankung erkannt wurde, z.B. bei cardiovaskulären Erkrankungen, ektopischen Calcifikationen etc.

Die Verbindungen können in Form ihrer Ester, Halbester – vorzugsweise jedoch in Form der freien Phosphonsäuren bzw. deren physiologisch verträglichen Salzen mit Alkali-, Erdalkalihydroxiden oder verträglichen organischen Basen wie zum Beispiel Natriumhydroxid, Kaliumhydroxid, Calziumhydroxid, Piperazin oder Methylglucamin angewendet werden. Als galenische Formulierungen sind Kapseln, Tabletten, Dragees, Suppositorien, aber auch Injektionslösungen und dermale Zubereitungen geeignet. Auch eine lokale Anwendung zur Behandlung dermaler oder systemischer Erkrankungen ist möglich.

Die Herstellung der Diphosphonsäure-Derivate erfolgt nach Methoden wie sie dem Fachmann wohlbekannt sind (Houben-Weyl, Methoden der organischen Chemie, Georg Thieme Verlag Stuttgart, 4. Auflage, 1963 Band XII/1, 453ff) und welche in dem nachfolgenden Schema dargestellt sind.

Schema

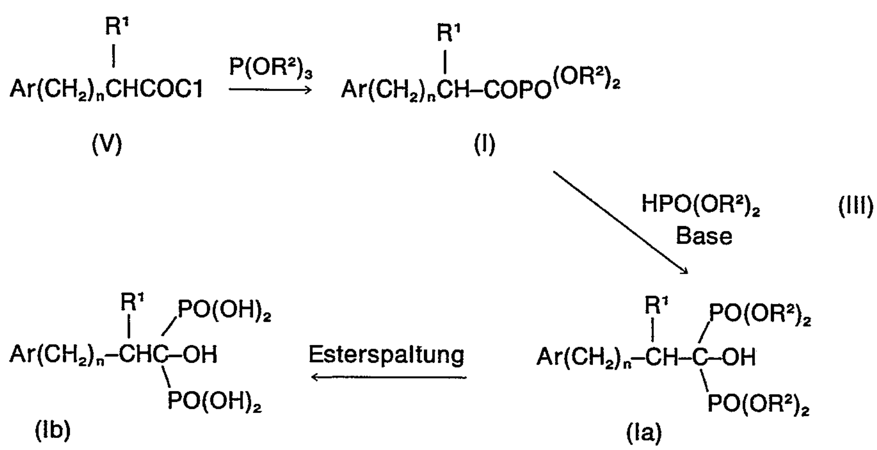


(V) (I) (III) (Ib) (Ia)

Als Basen die sich zur Durchführung des erfindungsgemässen Verfahrens eignen, seien beispielsweise sekundäre Amine, wie Diethylamin, Dipropylamin, Diisopropylamin, Morpholin oder Piperidin genannt. Die Reaktion wird in inerten organischen Lösungsmitteln, wie Ether (zum Beispiel Diethylether, Diisopropylether, Dioxan, Tetrahydrofuran) oder chlorierten Kohlenwasserstoffen (zum Beispiel Dichlormethan, Tetrachlorethan, Chloroform oder Tetrachlorkohlenstoff durchgeführt.

Die sich gegebenenfalls anschliessende Verseifung der Ester kann mittels Mineralsäuren (zum Beispiel halbkonzentrierte Salzsäure oder

Schwefelsäure) durchgeführt werden. Besonders schonend gelingt die Spaltung in einem inerten Lösungsmittel (zum Beispiel einen der obengenannten chlorierten Kohlenwasserstoffen) mit Trimethylsilyljodid. Zur Salzbildung werden die freien Säuren in üblicher Weise mit den entsprechenden Basen umgesetzt.

Die für das erfindungsgemässe Verfahren benötigten Ausgangssubstanzen der allgemeinen Formel II lassen sich aus den entsprechenden Säurechloriden der allgemeinen Formel V durch Umsetzung mit Dialkylphosphiten der allgemeinen Formel $P(OR^2)_3$ darstellen.

Die in dem Schema dargestellten Synthesewege sind anhand typischer Vertreter in den nachfolgenden Ausführungsbeispielen näher erläutert.

Beispiel 1

Zu einer Lösung von 9,5 g 4-Chlorphenylessigsäurechlorid in 50 ml Diethylether tropft man bei 0 °C eine Lösung von 6,9 g Trimethylphosphit in 20 ml Diethylether unter Rühren. Man rührt noch 90 Minuten, saugt den abgeschiedenen Niederschlag ab und erhält 9,3 g (71%) 2-(4-Chlorphenyl)-1-hydroxyethen-phosphonsäure-dimethylester vom Schmelzpunkt 89–92 °C.

Zu einer Lösung von 1,5 g Dimethylphosphit und 0,114 g Diethylamin in 50 ml Diethylether tropft man bei 0 °C eine Lösung von 3,95 g 2-(4-Chlorphenyl)-1-hydroxyethen-phosphonsäure-dimethylester in 10 ml Dichlormethan und 15 ml Diethylether. Man rührt noch 60 Stunden bei 0 °C, saugt das abgeschiedene Produkt ab, wäscht es mit Diethylether und erhält 4,0 g (71,6%) 2-(4-Chlorphenyl)-1-hydroxyethan-1.1-bis(phosphonsäure-dimethylester) vom Schmelzpunkt 123 °C.

Beispiel 2

Zu einer Suspension von 3,35 g 2-(4-Chlorphenyl)-1-hydroxyethan-1.1-bis(phosphonsäure-dimethylester) in 30 ml Tetrachlorkohlenstoff tropft man unter Stickstoff bei 0 °C 8,7 g Jodtrimethylsilan ein. Man lässt die Mischung 4 Stunden stehen, engt sie ein, hydrolysiert den Rückstand mit Aceton/Wasser, kristallisiert ihn aus Acetonitril/Diethylether um und erhält 2,45 g 2-(4-Chlorphenyl)-1-hydroxy-ethan-1.1-diphosphonsäure vom Schmelzpunkt 219 °C.

Beispiel 3

3,35 g 2-(4-Chlorphenyl)-1-hydroxy-ethen-1.1-bis(phosphonsäure-dimethylester) werden in 20 ml konzentrierter Salzsäure 2 Stunden lang auf dem Dampfbad erhitzt. Dann lässt man die Mischung erkalten, verdünnt mit Wasser, saugt das abgeschiedene Produkt ab, trocknet es, kristallisiert aus Acetonitril/Diethylether um und erhält 2,21 g (78%) 2-(4-Chlorphenyl)-1-hydroxy-ethan-1.1-diphosphonsäure vom Schmelzpunkt 219 °C.

Beispiel 4

4-Biphenyl-essigsäurechlorid wird wie im Beispiel 1 beschrieben umgesetzt und man erhält den 2-(4-Biphenyl)-1-hydroxy-ethen-1-phosphonsäure-dimethylester vom Schmelzpunkt 156–157 °C (aus Toluol).

Das erhaltene Produkt wird wie im Beispiel 1 beschrieben umgesetzt, und man erhält den 2-(4-Biphenyl)-1-hydroxy-ethan-1,1-bis(phosphonsäure-dimethylester vom Schmelzpunkt 147–149 °C (aus Tetrachlorkohlenstoff).

Beispiel 5

4-Fluorphenyl-essigsäurechlorid wird wie im Beispiel 1 umgesetzt und man erhält 2-(4-Fluorphenyl)-1-hydroxy-ethen-1-phosphonsäure-dimethylester vom Schmelzpunkt 63 °C (aus Hexan-Diisopropylether).

Das erhaltene Produkt wird wie im Beispiel 1 beschrieben umgesetzt und man erhält 2-(4-Fluorphenyl)-1-hydroxy-ethan-1.1-bis(phosphonsäure-dimethylester vom Schmelzpunkt 129 °C (aus Diethylether).

Beispiel 6

2-(4-Fluorphenyl)-1-hydroxy-ethan-1.1-bis (phosphonsäure-dimethylester wird wie im Beispiel 2 beschrieben umgesetzt und man erhält die 2-(4-Fluorphenyl-1-hydroxy-ethan-1.1-diphosphonsäure vom Schmelzpunkt 211–213 °C (aus Isopropanol).

Beispiel 7

2-Fluorphenyl-essigsäurechlorid wird wie im Beispiel 1 beschrieben umgesetzt und man erhält den 2-(2-Fluorphenyl) -1-hydroxy-ethen-1-phosphonsäure-dimethylester vom Schmelzpunkt 71–73 °C (aus Tetrachlorkohlenstoff/Hexan).

Das erhaltene Produkt wird wie im Beispiel 1 beschrieben umgesetzt und man erhält 2-(2-Fluorphenyl)-1-hydroxy-ethan-1,1-bis(phosphonsäure-dimethylester) vom Schmelzpunkt 146–148 °C (aus Tetrachlorkohlenstoff/Diisopropylether).

Beispiel 8

2-(2-Fluorphenyl)-1-hydroxy-ethan-1,1-bis(phosphonsäure-dimethylester wird wie im Beispiel 2 beschrieben umgesetzt und man erhält 2-(2-Fluorphenyl)-1-hydroxyethan-1,1-diphosphonsäure vom Schmelzpunkt 218–220 °C (aus Isopropanol).

Beispiel 9

2,6-Dichlorphenyl-essigsäurechlorid wird wie im Beispiel 1 beschrieben zum 2-(2,6-Dichlorphenyl)-1-hydroxy-ethen-1-phosphonsäure-dimethylester umgesetzt.

Das erhaltene Produkt wird wie im Beispiel 1 beschrieben umgesetzt und man erhält den 2-(2,6-Dichlorphenyl)-1-hydroxyethan-1,1-bis(phosphonsäure-dimethylester) vom Schmelzpunkt 130–132 °C (aus Toluol).

Beispiel 10

2-(2,6-Dichlorphenyl)-1-hydroxy-ethan-1,1-

bis(phosphonsäure-dimethylester)
wird wie im Beispiel 2 beschrieben umgesetzt und man erhält die 2-(2,6-Dichlorphenyl)-1-hydroxy-ethan-1,1-diphosphonsäure vom Schmelzpunkt 226–228 °C (aus Isopropanol).

Beispiel 11
2-Thienyl-essigsäurechlorid wird wie im Beispiel 1 umgesetzt und man erhält den 2-(2-Thienyl)-1-hydroxy-ethen-1-phosphonsäure-dimethylester vom Schmelzpunkt 148 °C.
Das erhaltene Produkt wird unter den im Beispiel 1 beschriebenen Bedingungen zum 2-(2-Thienyl)-1-hydroxy-ethan-1,1-bis(phosphonsäure-dimethylester) umgesetzt.

Beispiel 12
2-(2-Thienyl)-1-hydroxy-ethan-1,1-bis-(phosphonsäure-dimethylester)
wird wie im Beispiel 2 beschrieben zur 2-(2-Thienyl)-1-hydroxy-ethan-1,1-diphosphonsäure umgesetzt.

Beispiel 13
2-Naphthyl-essigsäurechlorid wird wie im Beispiel 1 beschrieben zum 2-(2-Naphthyl)-1-hydroxy-ethen-1-phosphonsäure-dimethylester vom Schmelzpunkt 120 °C umgesetzt.

Das erhaltene Produkt wird wie im Beispiel 1 beschrieben umgesetzt und man erhält den
2-(2-Naphthyl)-1-hydroxy-ethan-1,1-bis-(phosphonsäure-dimethylester)
vom Schmelzpunkt 119 °C.

Beispiel 14
2-(2-Naphthyl)-2-hydroxy-ethan-1,1-bis-(phosphonsäure-dimethylester)
wird wie im Beispiel 3 beschrieben umgesetzt und man erhält die 2-(2-Naphthyl)-1-hydroxy-ethan-1,1-diphosphonsäure vom Schmelzpunkt 257 °C.

Beispiel 15
1-Naphthyl-essigsäurechlorid wird wie im Beispiel 1 beschrieben zum 2-(1-Naphthyl)-1-hydroxy-ethen-1-phosphonsäure-dimethylester vom Schmelzpunkt 118 °C umgesetzt.

Das erhaltene Produkt wird wie im Beispiel 1 beschrieben zum
(1-Naphthyl)-1-hydroxy-ethan-1,1-bis-(phosphonsäure-dimethylester)
vom Schmelzpunkt 146 °C umgesetzt.

Beispiel 16
2-(1-Naphthyl)-1-hydroxy-ethan-1,1-bis-(phosphonsäure-dimethylester)
wird wie im Beispiel 3 beschrieben zur
2-(1-Naphthyl)-1-hydroxy-ethan-1,1-diphosphonsäure
umgesetzt.

Beispiel 17
2-(4-Chlorphenyl-propionsäurechlorid wird wie im Beispiel 1 beschrieben zum
2-(4-Chlorphenyl)-1-hydroxy-propen-1-phosphonsäure-dimethylester
umgesetzt.
Das erhaltene Produkt wird zum
2-(4-Chlorphenyl)-1-hydroxy-propan-1,1-bis(phosphonsäure-dimethylester
umgesetzt.

Beispiel 18
2-(4-Chlorphenyl)-1-hydroxy-propan-1,1-bis(phosphonsäure-dimethylester
wird wie im Beispiel 2 beschrieben zur
2-(4-Chlorphenyl)-1-hydroxy-propan-1,1-diphosphonsäure
umgesetzt.

Beispiel 19
3-Chlorphenyl-essigsäurechlorid wird unter den im Beispiel 1 beschriebenen Bedingungen umgesetzt und man erhält den
2-(3-Chlorphenyl)-1-hydroxy-ethen-1-phosphonsäure-dimethylester
vom Schmelzpunkt 136–138 °C (aus Diethylether).
Das erhaltene Produkt wird wie im Beispiel 1 beschrieben umgesetzt und man erhält den
2-(3-Chlorphenyl)-1-hydroxy-ethan-1,1-bis(phosphonsäure-dimethylester)
vom Schmelzpunkt 115–116 °C (aus Hexan/Diethylether).

Beispiel 20
2-(3-Chlorphenyl)-1-hydroxy-ethan-1,1-bis(phosphonsäure-dimethylester)
wird wie im Beispiel 2 beschrieben umgesetzt und man erhält die
2-(3-Chlorphenyl)-1-hydroxy-ethan-1,1-diphosphonsäure
vom Schmelzpunkt 198–200 °C (aus Isopropanol).

Beispiel 21
Eine Lösung von 2,1 g 2-(2-Fluorphenyl)-1-hydroxy-ethan-1,1-diphosphonsäure in 30 ml Wasser wird mit einer Lösung von 1,23 g Calciumacetat in 10 ml Wasser versetzt und eine Stunde lang bei Raumtemperatur gerührt. Dann saugt man den Niederschlag ab, kocht ihn mit Ethanol auf, trocknet ihn und erhält 2,28 g (96,3%) 2-(2-Fluorphenyl)-1-hydroxy-ethan-1,1-diphosphonsäure, Calciumsalz vom Schmelzpunkt oberhalb 350 °C.

Beispiel 22
2-(4-Biphenyl)-1-hydroxy-ethan-1,1-bis(phosphonsäure-dimethylester)
wird wie im Beispiel 2 beschrieben mit Jodtrimethylsilan umgesetzt, aufbereitet und man erhält die
2-(4-Biphenyl)-1-hydroxy-ethan-1,1-bisphosphonsäure
vom Schmelzpunkt 218–219 °C (Isopropanol).

Beispiel 23
3-(4-Chlorphenyl)-1-oxo-propan-1-phosphonsäure-dimethylester
a) Zu einer Lösung von 5,1 g 3-(4-Chlorphenyl)-propionsäurechlorid in 25 ml Diethylether tropft man bei 0 °C eine Lösung von 3,6 g Trimethylphosphit in 10 ml Diethylether. Man rührt zunächst 2,5 h bei 0 °C, dann weitere 2 h bei Raumtemperatur. Nach dem Einengen der Lösung wird der Rückstand am Kugelrohr bei 200–205 °C und 2.7 Pa (0,02 mm) Druck über destilliert. Man erhält 5,2 g (74%)
3-(4-Chlorphenyl)-1-oxo-propan-1-phosphonsäure-dimethylester.
3-(4-Chlorphenyl)-1-hydroxy-propan-1,1-bis-(phosphonsäure-dimethylester)
b) Zu einer Lösung von 2,1 g Dimethylphosphit und 0,1 g Diethylamin in 15 ml Diethylether tropft man unter Rühren bei 0 °C eine Lösung von 4,7 g 3-(4-Chlorphenyl)-1-oxo-propan-1-phosphonsäure-dimethylester
in 15 ml Diethylether. Es wird 30 min nachgerührt, der Niederschlag abgesaugt und mit Diethylether nachgewaschen. Man erhält 5,6 g (84%)
3-(4-Chlorphenyl)-1-hydroxy-propan-1,1-bis-(phosphonsäure-dimethylester)
vom Schmelzpunkt 112 °C.

Beispiel 24
3-(4-Chlorphenyl)-1-hydroxy-propan-1,1-diphosphonsäure
2,7 g 3-(4-Chlorphenyl)-1-hydroxypropan-1,1-bis(phosphonsäure-dimethylester) werden mit 17 ml konz. Salzsäure versetzt und 3 h auf 100 °C erhitzt. Nach Abkühlen wird das Kristallisat abgesaugt und aus Isopropanol umkristallisiert. Man erhält 1,62 g (70%) 3-(4-Chlorphenyl)-1-hydroxy-propan-1,1-diphosphonsäure vom Schmelzpunkt 201 °C.
Analog Beispiel 23 werden hergestellt:

Beispiel 25
a) 3-(3,4-Dichlorphenyl)-1-oxopropan-1-phosphonsäure-dimethylester
(destill. im Kugelrohr bei 4 Pa (0,03 mm), 235–40 °C Ofentemperatur)
und daraus
b) 3-(3,4-Dichlorphenyl)-1-hydroxypropan-1,1-bis(phosphonsäuredimethylester)
Schmelzpunkt 120 °C (Hexan-Diethylether)

Beispiel 26
a) 4-(4-Chlorphenyl)-1-oxobutan-1-phosphonsäure-dimethylester
(destill. im Kugelrohr bei 2,7 Pa (0,02 mm), 225 °C Ofentemperatur)
und daraus
b) 4-(4-Chlorphenyl)-1-hydroxybutan-1,1-bis-(phosphonsäure-dimethylester)
Schmelzpunkt 75 °C (Hexan-Diethylether)
Analog Beispiel 2 werden hergestellt:

Beispiel 27
3-(3,4-Dichlorphenyl)-1-hydroxypropan-1,1-diphosphonsäure
Schmelzpunkt 187 °C (Isopropanol)

Beispiel 28
4-(4-Chlorphenyl)-1-hydroxybutan-1,1-diphosphonsäure
Schmelzpunkt 181 °C (Isopropanol)

**Patentansprüche**

1. Diphosphonsäure-Derivate der allgemeinen Formel I

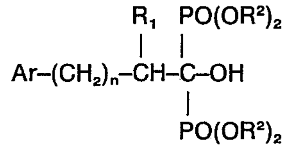

(I),

worin
n die Ziffern 0, 1 oder 2 bedeuten und worin
$R_1$ ein Wasserstoffatom oder eine 1 bis 4 Kohlenstoffatome enthaltende Alkylgruppe
$R_2$ ein Wasserstoffatom, ein Alkalimetallatom, ein Erdalkalimetallatom oder eine 1 bis 4 Kohlenstoffatome enthaltende Alkylgruppe und Ar einen durch Fluoratome oder Chloratome substituierten Phenylrest, einen Naphthylrest, einen Biphenylrest oder einen Thienylrest darstellen.
2. 3-(4-Chlorphenyl)-1-hydroxy-propan-1,1-bis-(phosphonsäure-dimethylester)
und 3-(4-Chlorphenyl)-1-hydroxy-propan-1,1-diphosphonsäure.
3. 3-(3,4-Dichlorphenyl)-1-hydroxypropan-1,1-bis(phosphonsäure-dimethylester)
und 3-(3,4-Dichlorphenyl)-1-hydroxy-propan-1,1-diphosphonsäure.
4. 4-(4-Chlorphenyl)-1-hydroxybutan-1,1-bis-(phosphonsäure-dimethylester)
und 4-(4-Chlorphenyl)-1-hydroxybutan-1,1-diphosphonsäure.
5. 2-(4-Chlorphenyl)-1-hydroxy-ethan-1,1-bis(phos-phonsäure-dimethylester)
und 2-(4-Chlorphenyl)-1-hydroxy-ethan-1,1-diphosphonsäure.
6. 2-(4-Biphenyl)-1-hydroxy-ethan-1,1-bis(phosphonsäure-dimethylester)
und 2-Biphenyl-1-hydroxy-ethan-1,1-bisphosphonsäure.
7. 2-(4-Fluorphenyl)-1-hydroxy-ethan-1,1-bis(phosphonsäure-dimethylester),
2-(4-Fluorphenyl)-1-hydroxy-ethan-1,1-diphosphonsäure
und deren Calciumsalz.
8. 2-(2-Fluorphenyl)-1-hydroxy-ethan-1,1-bis-(phosphonsäure-dimethylester)
und 2-(2-Fluorphenyl)-1-hydroxy-ethan-1,1-diphosphonsäure.
9. 2-(2,6-Dichlorphenyl)-1-hydroxy-ethan-1,1-bis(phosphonsäure-dimethylester)
und 2-(2,6-Dichlorphenyl)-1-hydroxy-ethan-1,1-diphosphonsäure.
10. 2-(2-Thienyl)-1-hydroxy-ethan-1,1-bis(phosphonsäure-dimethylester)
und 2-(2-Thienyl)-1-hydroxy-ethan-1,1-diphosphonsäure.
11. 2-(2-Naphthyl)-1-hydroxy-ethan-1,1-bis(phosphonsäure-dimethylester)
und 2-(2-Naphthyl)-1-hydroxy-ethan-1,1-diphosphonsäure.
12. 2-(1-Naphthyl)-1-hydroxy-ethan-1,1-bis-(phosphonsäure-dimethylester)

und 2-(1-Naphthyl)-1-hydroxy-ethan-1,1-diphosphonsäure.

13. 2-(4-Chlorphenyl)-1-hydroxy-propan-1,1-bis-(phosphon-säure-dimethylester) und 2-(4-Chlorphenyl)-1-hydroxy-propan-1,1-diphosphonsäure.

14. 2-(3-Chlorphenyl)-1-hydroxy-ethan-1,1-bis-(phosphonsäure-dimethylester) und 2-(3-Chlorphenyl)-1-hydroxy-ethan-1,1-diphosphonsäure.

15. Pharmazeutische Präparate gekennzeichnet durch einen Gehalt an einem Diphosphonsäure-Derivat gemäss Anspruch 1 bis 14.

16. Verfahren zur Herstellung von Diphosphonsäure-Derivaten der allgemeinen Formel I gemäss Patentanspruch 1, dadurch gekennzeichnet, dass man ein Acylphosphonat der allgemeinen Formel II

$$AR-(CH_2)_n-CHR^1-CO-PO(OR^2)_2 \quad (II),$$

worin AR, n, $R^1$ und $R^2$ die im Anspruch 1 genannte Bedeutung besitzen, in Gegenwart von Basen mit einem Dialkylphosphit der allgemeinen Formel III

$$HPO(OR^2)_2 \quad (III),$$

worin $R^2$ die im Anspruch 1 genannte Bedeutung besitzt umsetzt, die gebildeten Ester gewünschtenfalls verseift und gewünschtenfalls die Säuren in ihre Salze überführt.

**Claims**

1. Diphosphonic acid derivatives of the general formula I

$$\begin{array}{l} \qquad\qquad\quad R_1 \;\; PO(OR^2)_2 \\ \qquad\qquad\quad | \quad\; | \\ Ar-(CH_2)_n-CH-C-OH \qquad (I), \\ \qquad\qquad\qquad\quad | \\ \qquad\qquad\qquad\; PO(OR^2)_2 \end{array}$$

wherein

n represents the number 0, 1 or 2 and wherein

$R_1$ is a hydrogen atom or an alkyl group of 1 to 4 carbon atoms

$R_2$ is a hydrogen atom, an alkali-metal atom, an alkaline earth metal atom or an alkyl group of 1 to 4 carbon atoms and

Ar is a fluorine- or chlorine-substituted phenyl group, a naphthyl group, a biphenyl group or a thienyl group.

2. 3-(4-Chlorophenyl)-1-hydroxypropane-1,1-bis(phosphonic acid dimethyl ester) and 3-(4-chlorophenyl)-1-hydroxy-propane-1,1-diphosphonic acid.

3. 3-(3,4-Dichlorophenyl)-1-hydroxypropane-1,1-bis(phosphonic acid dimethyl ester) and 3-(3,4-dichlorophenyl)-1-hydroxypropane-1,1-diphosphonic acid.

4. 4-(4-Chlorophenyl)-1-hydroxybutane-1,1-bis(phosphonic acid dimethyl ester) and 4-(4-chlorophenyl)-1-hydroxybutane-1,1-diphosphonic acid.

5. 2-(4-Chlorophenyl)-1-hydroxyethane-1,1-bis(phosphonic acid dimethyl ester) and 2-(4-chlorophenyl)-1-hydroxyethane-1,1-diphosphonic acid.

6. 2-(4-Biphenyl)-1-hydroxyethane-1,1-bis(phosphonic acid dimethyl ester) and 2-Biphenyl-1-hydroxyethane-1,1-bisphosphonic acid.

7. 2-(4-Fluorophenyl)-1-hydroxyethane-1,1-bis(phosphonic acid dimethyl ester), 2-(4-fluorophenyl)-1-hydroxyethane-1,1-diphosphonic acid and their calcium salts.

8. 2-(2-Fluorophenyl)-1-hydroxyethane-1,1-bis(phosphonic acid dimethyl ester) and 2-(2-fluorophenyl)-1-hydroxyethane-1,1-diphosphonic acid.

9. 2-(2,6-Dichlorophenyl)-1-hydroxyethane-1,1-bis(phosphonic acid dimethyl ester) and 2-(2,6-dichlorophenyl)-1-hydroxyethane-1,1-diphosphonic acid.

10. 2-(2-Thienyl)-1-hydroxyethane-1,1-bis(phosphonic acid dimethyl ester) and 2-(2-thienyl)-1-hydroxyethane-1,1-diphosphonic acid.

11. 2-(2-Naphthyl)-1-hydroxyethane-1,1-bis(phosphonic acid dimethyl ester) and 2-(2-naphthyl)-1-hydroxyethane-1,1-diphosphonic acid.

12. 2-(1-Naphthyl)-1-hydroxyethane-1,1-bis(phosphonic acid dimethyl ester) and 2-(1-naphthyl)-1-hydroxyethane-1,1-diphosphonic acid.

13. 2-(4-Chlorophenyl)-1-hydroxypropane-1,1-bis(phosphonic acid dimethyl ester) and 2-(4-chlorophenyl)-1-hydroxypropane-1,1-diphosphonic acid.

14. 2-(3-Chlorophenyl)-1-hydroxyethane-1,1-bis(phosphonic acid dimethyl ester) and 2-(3-chlorophenyl)-1-hydroxypropane-1,1-diphosphonic acid.

15. Pharmaceutical preparations characterised by a content of a diphosphonic acid derivative according to claims 1 to 14.

16. Process for the preparation of diphosphonic acid derivatives of the general formula I according to claim 1, characterised in that an acylphosphonate of the general formula II

$$AR-(CH_2)_n-CHR^1-CO-PO(OR^2)_2 \quad (II),$$

wherein AR, n, $R^1$ and $R^2$ have the meanings given in claim 1 is reacted in the presence of a base with a dialkylphosphite of the general formula III

$$HPO(OR^2)_2 \quad (III),$$

wherein $R^2$ has the meaning given in claim 1, the formed ester is optionally saponified and the acids are optionally converted into their salts.

**Revendications**

1. Dérivés d'acides diphosphoniques répondant à la formule générale I:

$$Ar-(CH_2)_n-\overset{R_1}{\overset{|}{CH}}-\underset{\underset{PO(OR^2)_2}{|}}{\overset{\overset{PO(OR^2)_2}{|}}{C}}-OH \qquad (I),$$

dans laquelle

n représente un nombre égal à 0, à 1 ou à 2,

$R_1$ représente un atome d'hydrogène ou un radical alkyle contenant de 1 à 4 atomes de carbone,

$R_2$ représente un atome d'hydrogène, un atome de métal alcalin, un atome de métal alcalino-terreux ou un radical alkyle contenant de 1 à 4 atomes de carbone, et

Ar représente un radical phényle porteur d'atomes de fluor ou d'atomes de chlore, un radical naphtyle, un radical biphénylyle ou un radical thiényle.

2. (Chloro-4-phényl)-3-hydroxy-1-propane-bis-(phosphonate de diméthyle)-1,1
et acide (chloro-4-phényl)-3-hydroxy-1-propane-diphosphonique-1,1.

3. (Dichloro-3,4 phényl)-3 hydroxy-1 propane-bis-(phosphonate de diméthyle)-1,1
et acide (dichloro-3,4 phényl)-3 hydroxy-1 propane-diphosphonique-1,1.

4. (Chloro-4 phényl)-4 hydroxy-1 butane-bis-(phosphonate de diméthyle)-1,1
et acide (chloro-4 phényl)-4 hydroxy-1 butane-diphosphonique-1,1.

5. (Chloro-4 phényl)-2 hydroxy-1 éthane-bis-(phosphonate de diméthyle)-1,1
et acide (chloro-4 phényl)-2 hydroxy-1 éthane-diphosphonique-1,1.

6. (Biphénylyl-4)-2 hydroxy-1 éthane-bis-(phosphonate de diméthyle)-1,1
et acide (biphénylyl)-2 hydroxy-1 éthane-diphosphonique-1,1.

7. (Fluoro-4 phényl)-2 hydroxy-1 éthane-bis-(phosphonate de diméthyle)-1,1,
acide (fluoro-4 phényl)-2 hydroxy-1 éthane-diphosphonique-1,1
et sel calcique de cet acide.

8. (Fluoro-2 phényl)-2 hydroxy-1 éthane-bis(phosphonate de diméthyle)-1,1
et acide (fluoro-2 phényl)-2 hydroxy-1 éthane-diphosphonique-1,1.

9. (Dichloro-2,6 phényl)-2 hydroxy-1-éthane-bis-(phosphonate de diméthyle)-1,1
et acide (dichloro-2,6 phényl)-2 hydroxy-1 éthane-diphosphonique-1,1.

10. (Thiényl-2)-2 hydroxy-1 éthane-bis-(phosphonate de diméthyle)-1,1
et acide (thiényl-2)-2 hydroxy-1-éthane-diphosphonique-1,1.

11. (Naphtyl-2)-2 hydroxy-1 éthane-bis-(phosphonate de diméthyle)-1,1
et acide (naphtyl-2)-2 hydroxy-1-éthane-diphosphonique-1,1.

12. (Naphtyl-1)-2 hydroxy-1 éthane-bis-(phosphonate de diméthyle)-1,1
et acide (naphtyl-1)-2 hydroxy-1-éthane-diphosphonique-1,1.

13. (Chloro-4 phényl)-2 hydroxy-1 propane bis-(phosphonate de diméthyle)-1,1
et acide (chloro-4 phenyl)-2 hydroxy-1 propane-diphosphonique-1,1.

14. (Chloro-3 phényl)-2 hydroxy-1 éthane-bis-(phosphonate de diméthyle)-1,1
et acide (chloro-3 phényl)-2 hydroxy-1 éthane-diphosphonique-1,1.

15. Compositions pharmaceutiques qui contiennent un dérivé d'acide diphosphonique selon l'une quelconque des revendications 1 à 14.

16. Procédé de préparation de dérivés d'acides diphosphoniques de formule générale I selon la revendication 1, procédé caractérisé en ce qu'on fait réagir un acylphosphonate répondant à la formule générale II:

$$Ar-(CH_2)_n-CHR^1-CO-PO(OR^2)_2 \qquad (II)$$

dans laquelle Ar, n, $R^1$ et $R^2$ ont les significations données à la revendication 1, en présence de bases, avec un phosphite de dialkyle répondant à la formule générale III:

$$HPO(OR^2)_2 \qquad (III)$$

dans laquelle $R^2$ a la signification donnée à la revendication 1, si on le désire on saponifie les esters formés et, si on le désire, on transforme les acides en leurs sels.